# EUROPEAN PATENT SPECIFICATION

(11) **EP 4 101 657 B1**
(45) Date of publication and mention of the grant of the patent: **15.04.2026**
(21) Application number: 22177904.4
(22) Date of filing: 08.06.2022
(51) Int. Cl.: B60C 1/00, C08L 9/06, C08L 45/02, C08L 25/16, C08L 91/00, C08K 3/36

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 10.06.2021 US 202117343983
(43) Date of publication of application: 14.12.2022
(73) Proprietor: The Goodyear Tire & Rubber Company, Akron, OH 44316 (US)
(72) Inventor: ISITMAN, Nihat Ali, Hudson, 44236 (US); POMPEI, Manuela, L-9768 Reuler (LU); ENGELDINGER, Eric, L-8508 Redange/Attert (LU); KULIG, Joseph John, Tallmadge, 44278 (US)
(74) Representative: Kutsch, Bernd

(56) References cited:
- EP-B1- 3 450 206
- US-B2- 10 767 034
- US-B2- 9 745 454

## Description

### Field of the Invention

The present exemplary embodiments relate to a rubber composition containing a combination of at least two different solution polymerized styrene-butadiene rubbers (s-SBRs), each extended with an oil, and a relatively low Tg traction resin, which replaces the rubber processing oil typically added during rubber compounding. It finds particular application in conjunction with tire components and will be described with particular reference thereto. However, it is to be appreciated that the present exemplary embodiments are also amenable to other like applications.

### Background of the Invention

Tires are designed to possess a combination of properties that provide for, *inter alia,* safe handling of a vehicle and fuel economy. A tire is desired to possess good wet skid resistance (i.e., wet weather grip), low rolling resistance, and good wear (i.e., long tread life). However, these properties depend, to a great extent, on the dynamic viscoelastic properties of the rubbers utilized in making the tire. For example, rubbers having a high rebound are typically used in tires to reduce rolling resistance and/or to improve wear, while rubbers that undergo a large energy loss are used to increase wet skid resistance. To balance these two viscoelastically inconsistent properties, mixtures of various types of synthetic and natural rubber are employed in tire treads. For instance, various mixtures exist in which styrene butadiene rubber and polybutadiene rubber are used. US10767034 relates to a pneumatic tire having a tread comprising a vulcanizable rubber composition, which exhibits good wet skid resistance, low rolling resistance, and good wear characteristics.

However, an improvement to one property often requires that an acceptable tradeoff be made between it and another property. A rubber composition is desired that improves the balance of wet skid resistance and rolling resistance, with no compromise to tread performance.

### Summary of the Invention

The invention relates to a rubber composition in accordance with claim 1, and to a tire in accordance with claim 14.

Dependent claims refer to preferred embodiments of the invention.

A preferred embodiment of the invention is directed to a pneumatic tire having a tread comprising a vulcanizable rubber composition. The rubber composition comprises, based on 100 parts by weight of elastomer (phr):
(A) from 40 to 80 phr of a first solution polymerized styrene-butadiene rubber (s-SBR) with a bound styrene content of 5 to 50 percent by weight, a vinyl 1,2 content of from 10 to 40 percent by weight based on the rubber weight, and a Tg of from - 85°C to -20°C;
(B) from 30 to 70 phr of a second solution polymerized styrene-butadiene rubber with a bound styrene content of from 15 to 45 percent by weight, a vinyl 1,2 content of from 20 to 60 percent by weight and a Tg of from -30°C to -5°C;
(C) from 5 to 80 phr of a resin, the resin having a Tg of from -100°C to 30°C; and
(D) from 0 to 60 phr of a rubber processing oil;
wherein a total amount of resins and oils is less than 100 phr.

Another preferred embodiment of the invention is directed to a pneumatic tire having a tread comprising a vulcanizable rubber composition comprising, based on 100 parts by weight of elastomer (phr):
(A) from 40 to 80 phr of a first solution polymerized styrene-butadiene rubber (s-SBR) extended with less than 37.5 phr oil;
(B) from 30 to 70 phr of a second solution polymerized styrene-butadiene rubber extended with less than 37.5 phr oil, the second s-SBR being different from the first s-SBR;
(C) from 5 to 80 phr of a low Tg hydrocarbon resin, the low Tg hydrocarbon resin having a Tg of from -100° C to 30° C; and
(D) from 60 to 170 phr of silica;

wherein the rubber composition excludes additional rubber processing oil and
wherein a total amount of resins and oils is less than 100 phr.

### Detailed Description of Preferred Embodiments the Invention

Disclosed is a pneumatic tire having a tread comprising a vulcanizable rubber composition. The rubber composition comprises, based on 100 parts by weight of elastomer (phr):
(A) from 40 to 80 phr of a first solution polymerized styrene-butadiene rubber (s-SBR) with a bound styrene content of 5 to 50 percent by weight, a vinyl 1,2 content of from 10 to 40 percent by weight based on the rubber weight, and a Tg of from - 85°C to -20°C;
(B) from 30 to 70 phr of a second solution polymerized styrene-butadiene rubber with a bound styrene content of from 15 to 45 percent by weight, a vinyl 1,2 content of from 20 to 60 percent by weight and a Tg of from -30°C to -5°C;
(C) from 5 to 80 phr of a resin, the resin having a Tg of from -100°C to 30°C; and
(D) from 0 to 60 phr of a rubber processing oil;
wherein a total amount of resins and oils is less than 100 phr.

One component of the rubber composition is from 40 to 80 phr of a first solution polymerized styrene-butadiene rubber (s-SBR) with a bound styrene content of 5 to 50 percent by weight, a vinyl 1,2 content of from 10 to 40 percent by weight based on the rubber weight, and a Tg of from -85° C to -20° C.

As the first styrene-butadiene rubber, suitable solution polymerized styrene-butadiene rubbers may be made, for example, by organo lithium catalyzation in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are known in the art, for example as described in U.S. Pat. Nos. 4,843,120; 5,137,998; 5,047,483; 5,272,220; 5,239,009; 5,061,765; 5,405,927; 5,654,384; 5,620,939; 5,627,237; 5,677,402; 6,103,842; and 6,559,240, the disclosures of which are hereby incorporated by reference in their entirety.

Such solution polymerized styrene-butadiene rubber may be tin- or silicon-coupled, as is known in the art. In one embodiment, suitable s-SBR may be at least partially silicon-coupled.

A second component of the rubber composition is from 30 to 70 phr of a second solution polymerized styrene-butadiene rubber that is different from the first s-SBR. The second s-SBR preferably has a bound styrene content of from 15 to 45 percent by weight, a vinyl 1,2 content of from 20 to 60 percent by weight and a Tg of from -30°C to -5°C.

As the second styrene-butadiene rubber, suitable solution polymerized styrene-butadiene rubbers may be made, for example, using the same methods disclosed above for the first s-SBR.

As the second styrene-butadiene rubber, suitable solution polymerized styrene-butadiene rubbers are available commercially, such as NS540 from Zeon. Such solution polymerized styrene-butadiene rubber may be tin- or silicon-coupled, as is known in the art. In one embodiment, suitable s-SBR may be at least partially silicon-coupled.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. Such Tg is determined as a peak midpoint or inflection point by a differential scanning calorimeter (DSC) at a temperature rate of increase of 10°C per minute, according to ASTM D7426.

Another component of the rubber composition is from 5 to 20 phr of polybutadiene, preferably a cis-1,4 polybutadiene, also known as polybutadiene rubber or polybutadiene (BR). Suitable polybutadiene rubbers may be prepared, for example, by organic solution polymerization of 1,3-butadiene. The BR preferably has at least a 90 percent cis 1,4-content and/or a glass transition temperature Tg in a range of from -95 to -105°C. Suitable polybutadiene rubbers are available commercially, such as Budene^{®} 1207 from Goodyear.

The rubber composition may optionally include rubber processing oil. The rubber composition can include from 0 to 60 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. In one embodiment, the rubber composition includes a low PCA oil. Suitable low PCA oils include but are not limited to mild extraction solvates (MES), treated distillate aromatic extracts (TDAE), residual aromatic extract (RAE), SRAE, and heavy napthenic oils as are known in the art; see, for example, U.S. Pat. Nos. 5,504,135; 6,103,808; 6,399,697; 6,410,816; 6,248,929; 6,146,520; U.S. Published Applications 2001/00023307; 2002/0000280; 2002/0045697; 2001/0007049; EP 0 839 891 A1; JP-A-2002-097369; and ES-A-2122917.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Suitable TDAE oils are available as Tudalen^{®} SX500 from Klaus Dahleke KG, VivaTec^{®} 400 and VivaTec^{®} 500 from H&R Group, and Enerthene^{®} 1849 from BP, and Extensoil^{®} 1996 from Repsol. The oils may be available as the oil alone or along with an elastomer in the form of an extended elastomer.

Suitable vegetable oils include, for example, soybean oil, sunflower oil, rapeseed oil, and canola oil which are in the form of esters containing a certain degree of unsaturation.

Another component of the rubber composition is from 5 to 80 phr of a resin. In one embodiment, the resin has a Tg of from -100° C to 30° C and, more preferably, - 70° C to 25° C and, most preferably, -40° C to 20° C. In another embodiment, the resin is a hydrocarbon resin having a Tg below 30° C.

The measurement of Tg for resins is DSC according to ASTM D6604 or equivalent.

Resin softening point is determined by ASTM E28, which might sometimes be referred to as a ring and ball softening point.

In one embodiment, the rubber composition may additionally include a hydrocarbon resin having a glass transition temperature above 20° C. Such optional hydrocarbon resin may have a softening point above 30° C.

The resin is selected from the group consisting of any hydrocarbon chemistry type resin (AMS, coumarone-indene, C5, C9, C5/C9, DCPD, DCPD/C9, others) & any modification thereof (phenol, C9, hydrogenation, recycled monomers, others) and any renewable biobased chemistry type resin (like any polyterpene, gum rosin, tall oil rosin, etc) & modification (phenol, C9, hydrogenation, DCPD, esters, others) and mixture thereof.

In one embodiment, the resin is a coumarone-indene resin containing coumarone and indene as the monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cycopentadiene, and diolefins such as isoprene and piperlyene. Suitable coumarone-indene resin is available commercially as Novares^{®} C30 from Rutgers Novares GmbH.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefins containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above.

The styrene/alphamethylstyrene resin is considered herein to be a relatively short chain copolymer of styrene and alphamethylstyrene. The styrene/alphamethylstyrene resin may have, for example, a styrene content in a range of from 10 to 90 percent. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and by its glass transition temperature, molecular weight and molecular weight distribution. Suitable styrene/alphamethylstyrene resin is available commercially as PURE 20 AS from Rütgers Novares GmbH.

Terpene-phenol resins may be used. Terpene-phenol resins may be derived by copolymerization of phenolic monomers with terpenes such as limonenes, pinenes and delta-3-carene.

In one embodiment, the resin is a resin derived from rosin and derivatives. Representative thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

In one embodiment, said resin may be partially or fully hydrogenated.

The rubber composition includes a combination of the optional processing oil, optional hydrocarbon resin of Tg above 20° C and a resin of Tg between -100° C and 30° C in an amount up to 80 phr.

The vulcanizable rubber composition may include from 60 to 170 phr of silica.

In a preferred embodiment, the weight ratio of silica to the total of hydrocarbon resins and oils is greater than 2.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243 and 315; silicas available from Rhodia, with, for example, designations of Z1165MP, Z165GR, and Zeosil Premium^{®} 200MP; and silicas available from Degussa AG with, for example, designations VN2 and VN3. The vulcanizable rubber composition may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), particulate polymer gels such as those disclosed in U.S. Patents Nos. 6,242,534; 6,207,757; 6,133,364; 6,372,857; 5,395,891; or 6,127,488, and plasticized starch composite filler such as that disclosed in U.S. Patent No. 5,672,639.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z VIII

in which Z is selected from the group consisting of 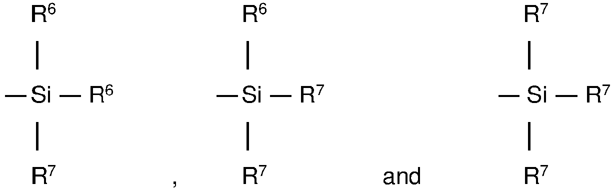 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula VIII, preferably Z is 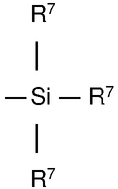 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include compounds disclosed in U.S. Publication 2006/0041063, the disclosure of which is incorporated herein by reference in its entirety. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound of formula I in a rubber composition will vary depending on the level of other additives that are used. The amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 5 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 6, preferably 0.8 to 3, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a tread of a tire.

The pneumatic tire of the present invention may be a race tire, passenger tire, aircraft tire, agricultural, earthmover, off-the-road, or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### EXAMPLE 1

In this example, the effects on the performance of rubber compounds are illustrated for compounds in which traction resins replace some of the extender oil in s-SBR materials. Rubber compositions were mixed in a multi-step mixing procedure following the recipes in Table 1. Standard amounts of curatives and curing techniques were also used. The rubber compounds were then cured and tested for various properties including, *inter alia,* hysteresis, stress strain, tensile strength, elongation at break, wet skid resistance, and rolling resistance.

A control rubber compound was prepared as Sample A using s-SBR materials that have 37.5 phr of traditional extender oil.

A control rubber compound was prepared as Sample B using (i) s-SBR materials that were both formed using less phr of extender oil than the s-SBRs in Sample A and (ii) additional rubber processing oil, with all other ingredients being the same.

For the Samples C-F, rubber compounds were prepared using the same s-SBR materials of Control Sample B but replacing the rubber processing oil with resins of varying Tg, with all other ingredients being the same

The basic formulations are illustrated in the following Table 2, which is presented in parts per 100 parts by weight of elastomer (phr).

**TABLE 1**

| | Samples | | | | | |
|---|---|---|---|---|---|---|
| | Control | | Comparative | | Inventive | |
| | A | B | C | D | E | F |
| s-SBR¹ | 55 | 0 | 0 | 0 | 0 | 0 |
| s-SBR² | 68.75 | 0 | 0 | 0 | 0 | 0 |
| BR³ | 10 | 10 | 10 | 10 | 10 | 10 |
| s-SBR⁴ | 0 | 50 | 50 | 50 | 50 | 50 |
| s-SBR⁵ | 0 | 62.5 | 62.5 | 62.5 | 62.5 | 62.5 |
| Traction resin A⁶ | 0 | 0 | 33.25 | 0 | 0 | 0 |
| Traction resin B⁷ | 0 | 0 | 0 | 33.25 | 0 | 0 |
| Traction resin C⁸ | 0 | 0 | 0 | 0 | 33.25 | 0 |
| Traction resin D⁹ | 0 | 0 | 0 | 0 | 0 | 33.25 |
| TDAE oil | 22 | 33.25 | 0 | 0 | 0 | 0 |
| Antioxidants | 4.8 | 4.8 | 4.8 | 4.8 | 4.8 | 4.8 |
| Stearic acid | 3.5 | 3.5 | 3.5 | 3.5 | 3.5 | 3.5 |
| Silane¹⁰ | 8.96 | 8.96 | 8.96 | 8.96 | 8.96 | 8.96 |
| Silica¹¹ | 112 | 112 | 112 | 112 | 112 | 112 |
| ZnO | 2.5 | 2.5 | 2.5 | 2.5 | 2.5 | 2.5 |
| Sulfur | 1.6 | 1.6 | 1.6 | 1.6 | 1.6 | 1.6 |
| Accelerators | 4.9 | 4.9 | 4.9 | 4.9 | 4.9 | 4.9 |

| | | | | | | |
|---|---|---|---|---|---|---|
| ¹ Solution polymerized, oil extended SBR of Tg about -25°C (as oil extended), with styrene content of 34% and vinyl content of 38%, with 37.5 phr extender TDAE oil obtained from Asahi Chemical as Tufdene E680. The raw s-SBR polymer (without oil extension) has a Tg of about -13°C. ² Solution polymerized, oil extended SBR of Tg about -34°C (as oil extended), with styrene content of 40% and vinyl content of 14%, with 37.5 phr extender TDAE oil obtained from Trinseo as SLR6430. The raw s-SBR polymer (without oil extension) has a Tg of about -29°C. ³ Polybutadiene, obtained as Budene 1207 from The Goodyear Tire & Rubber Company. ⁴ Solution polymerized, oil extended SBR of Tg about -23°C (as oil extended), with styrene content of 34% and vinyl content of 38%, with 25 phr extender TDAE oil. The raw s-SBR polymer (without oil extension) has a Tg of about -13°C. ⁵ Solution polymerized, oil extended SBR of Tg about -32°C (as oil extended) with styrene content of 40% and vinyl content of 14%, with 25 phr extender TDAE oil obtained as NS540 from Zeon. The raw s-SBR polymer (without oil extension) has a Tg of about -13°C. ⁶ Copolymer of styrene and alpha-methylstyrene, Tg = +80°C, obtained as Norsolene W120 from Cray Valley. ⁷ Copolymer of styrene and alpha-methylstyrene, Tg = +39°C, obtained as Sylvatraxx 4401 from Arizona Chemicals. ⁸ Copolymer of styrene and alpha-methylstyrene, Tg = -20°C, obtained as Pure AS20 from Rütgers. ⁹ Coumarone-indene resin, Tg = -10°C, obtained as Novares C30 from Rütgers. ¹⁰ TESPD type silane coupling agent. ¹¹ Zeosil Z1165MP precipitated silica from Solvay with a CTAB surface area of 160 m2/g. | | | | | | |

Various cured rubber properties of the Controls A and B and Samples C-F are reported in the following Table 2.

**TABLE 2**

| | Samples | | | | | |
|---|---|---|---|---|---|---|
| | Control | | Comparative | | Inventive | |
| | A | B | C | D | E | F |
| **Stiffness/Hardness** | | | | | | |
| Shore A | 68 | 68 | 70 | 71 | 69 | 67 |

| **Modulus, Tensile, Elongation** | | | | | | |
|---|---|---|---|---|---|---|
| 300% Modulus at strain (MPa) | 9.6 | 10.4 | 10.6 | 10.8 | 10.7 | 11.1 |
| Tensile (MPa) | 20.2 | 18.0 | 22.6 | 19.7 | 18.8 | 20.7 |
| Elongation (%) | 560 | 490 | 587 | 514 | 494 | 524 |

| **Wet Indicator** | | | | | | |
|---|---|---|---|---|---|---|
| Rebound at 0° C. (lower is better) | 8.3 | 8.9 | 10.2 | 7.3 | 6.4 | 5.1 |

| **RR Indicator** | | | | | | |
|---|---|---|---|---|---|---|
| Rebound at 100° C. (higher is indication of beneficially lower rolling resistance) | 59.9 | 58.4 | 53.6 | 55.5 | 59.6 | 60.3 |

As can be seen in Table 2, the overall performance properties of the Inventive Samples E and F (devoid of high Tg resin and a rubber processing oil added during the rubber compounding stage) compared favorably with the performance properties of the Control Samples A and B.

It is further seen that the Comparative Sample C (using a high Tg traction resin with a Tg of 80° C) does not improve the predictive wet traction and deteriorates the predictive rolling resistance property.

It is further seen that the Comparative Sample D (using a traction resin with a Tg of 39° C) improves the predictive wet traction property to the detriment of the predictive rolling resistance property. Therefore, the rubber compound of Comparative Sample D involves a tradeoff.

It is further seen that the rubber compounds of Inventive Samples E and F (using low Tg traction resins with Tg values of -20° C and -10° C, respectively), the tread compound property relating to predictive wet traction is improved while the predictive rolling resistance is maintained.

It is hereby concluded that, for tire treads formed from rubber compositions comprising partially miscible blends of at least two s-SBRs, the wet traction is improved with no trade-off between wet traction and rolling resistance when a high loading of low Tg resin is used to replace rubber processing oil added during the rubber compounding stage. The overall balance between the properties is maintained.

### EXAMPLE 2

In this example, the effects on the performance of rubber compounds are illustrated for compounds in which a low Tg traction resin replaces high Tg hydrocarbon resins and low Tg oil. Rubber compositions were mixed in a multi-step mixing procedure following the recipes in Table 3. Standard amounts of curatives and curing techniques were also used. The rubber compounds were then cured and tested for various properties including, *inter alia,* hysteresis, stress strain, tensile strength, elongation at break, wet skid resistance, and rolling resistance.

A rubber compound was prepared as Sample G using s-SBR materials that have 37.5 phr of traditional extender oil; a combination of resins including a high Tg resin; oil; and silica.

For Sample H, a rubber compound was prepared using the same s-SBR materials of Sample G but replacing the resins and the rubber processing oil with a low Tg resin with a higher total loading level. All other ingredients are the same. The phr of low Tg resin in Sample H matches the total amount of hydrocarbon resins and oils in Sample G.

The basic formulations are illustrated in the following Table 3, which is presented in parts per 100 parts by weight of elastomer (phr).

**TABLE 3**

| | Samples | |
|---|---|---|
| | G | H |
| s-SBR¹ | 55 | 55 |
| s-SBR² | 68.75 | 68.75 |
| BR³ | 10 | 10 |
| Traction resin A⁴ | 6 | 0 |
| Traction resin B⁵ | 6 | 0 |
| Traction resin D⁶ | 0 | 18 |
| TDAE oil | 6 | 0 |
| Antioxidants | 6.7 | 6.7 |
| Stearic acid | 2.5 | 2.5 |
| Silane⁷ | 9.9 | 9.9 |
| Silica⁸ | 106 | 106 |
| ZnO | 2.5 | 2.5 |
| Sulfur | 1.7 | 1.7 |
| Accelerators | 5.6 | 5.6 |

| | | |
|---|---|---|
| ¹ Solution polymerized, oil extended SBR of Tg about -25°C (as oil extended), with styrene content of 34% and vinyl content of 38%, with 37.5 phr extender TDAE oil obtained from Asahi Chemical as Tufdene E680. The raw s-SBR polymer (without oil extension) has a Tg of about -13°C. ² Solution polymerized, oil extended SBR of Tg about -34°C (as oil extended), with styrene content of 40% and vinyl content of 14%, with 37.5 phr extender TDAE oil obtained from Trinseo as SLR6430. The raw s-SBR polymer (without oil extension) has a Tg of about -29°C. ³ Polybutadiene, obtained as Budene 1207 from The Goodyear Tire & Rubber Company. ⁴ Coumarone-indene resin, Tg = 55°C, obtained as Novares C100 from Rütgers. ⁵ Copolymer of styrene and alpha-methylstyrene, Tg = +39°C, obtained as Sylvatraxx 4401 from Arizona Chemicals. ⁶ Coumarone-indene resin, Tg = -10°C, obtained as Novares C30 from Rütgers. ⁷ TESPD type silane coupling agent. ⁸ Zeosil Premium precipitated silica from Solvay with a CTAB surface area of 200 m2/g. | | |

Various cured rubber properties of the Sample G and Sample H are reported in the following Table 4.

**TABLE 4**

| | Samples | |
|---|---|---|
| | G | H |
| **Stiffness/Hardness** | | |
| Shore A | 69 | 68 |

| **Modulus, Tensile, Elongation** | | |
|---|---|---|
| 300% Modulus at strain (MPa) | 9.8 | 9.7 |
| Tensile (MPa) | 19.8 | 20.5 |
| Elongation (%) | 528 | 558 |

| **Wet Indicator** | | |
|---|---|---|
| Rebound at 0° C. (lower is better) | 7.3 | 7.1 |

| **RR Indicator** | | |
|---|---|---|
| Rebound at 100° C. (higher is indication of beneficially lower rolling resistance) | 54.0 | 56.8 |

As can be seen in Table 4, the overall performance properties of the rubber composition H (devoid of high Tg resin and a rubber processing oil added during the rubber compounding stage) compared favorably with the performance properties of Sample G.

Sample H is characterized by improved stiffness and hysteresis over Sample G. Therefore, an inclusion of a low Tg resin in the rubber compounds as a replacement of high Tg resin and processing oil (during rubber compounding) indicates a similar, but improved, stiffness and hysteresis.

The 300% modulus value from stress strain testing of Sample H approaches that of Sample G. Therefore, an inclusion of a low Tg resin in the rubber compounds as a replacement of high Tg resin and processing oil (during rubber compounding) indicates a similar stress strain.

Sample H is further characterized by a tensile strength at break of 20.5 (MPa), which is an improvement over Sample G (19.8 MPa). Therefore, an inclusion of a low Tg resin in the rubber compounds as a replacement of high Tg resin and processing oil (during rubber compounding) indicates improved tensile strength.

Sample H is further characterized by an elongation at break of 558%, which is an improvement over Sample G (at 528%). Therefore, an inclusion of a low Tg resin in the rubber compounds as a replacement of high Tg resin and processing oil (during rubber compounding) indicates improved elongation.

Therefore, it is observed that the treadwear performance of Sample H is similar to and/or improved over Sample G.

Sample H is also characterized by a wet indicator value of 7.1, which is an improvement over Sample G (7.3). Therefore, an inclusion of a low Tg resin in the rubber compound as a replacement of high Tg resin and processing oil (during rubber compounding) indicates an improved wet skid resistance or braking performance.

Sample H is also characterized by an improved rolling resistance indicator value of 56.8, which is an improvement over Sample G 54. Therefore, an inclusion of a low Tg resin in the rubber compound as a replacement of high Tg resin and processing oil (during rubber compounding) indicates an improved rolling resistance.

**It** is hereby concluded that, for tire treads formed from rubber compositions devoid of high Tg resin and a rubber processing oil added during the rubber compounding stage, the overall balance of rubber performances is improved when the rubber composition includes a low Tg hydrocarbon. It is further concluded that, for tire treads formed from such compositions, wet braking and rolling resistance are improved without necessitating that a trade-off be accepted between the two properties.

One aspect of the invention is that the disclosed tread rubber compound requires no trade-off be made between properties.

## Claims

1. A vulcanizable rubber composition comprising, based on 100 parts by weight of elastomer (phr):
(A) from 40 to 80 phr of a first solution polymerized styrene-butadiene rubber (s-SBR); wherein (i) said first solution polymerized styrene-butadiene rubber (s-SBR) has a bound styrene content in a range of from 5 to 50 percent by weight, a vinyl 1,2 content in a range of from 10 to 40 percent by weight based on the rubber weight, and a Tg in a range of from -85°C to -20°C, as measured in accordance with ASTM D7426; and/or wherein (ii) said first solution polymerized styrene-butadiene rubber is extended with less than 37.5 phr of oil;
(B) from 30 to 70 phr of a second and different solution polymerized styrene-butadiene rubber (s-SBR); wherein (i) said second solution polymerized styrene-butadiene rubber (s-SBR) has a bound styrene content in a range of from 15 to 45 percent by weight, a vinyl 1,2 content in a range of from 20 to 60 percent by weight, and a Tg in a range of from -30°C to -5°C, as measured in accordance with ASTM D7426; and/or wherein (ii) said the second polymerized styrene-butadiene rubber is extended with less than 37.5 phr of oil;
(C) from 5 to 80 phr of a resin, the resin having a Tg in a range of from - 100°C to +30°C, as measured in accordance with ASTM D6604; and
(D) from 0 to 60 phr of a rubber processing oil;
wherein a total amount of resins and oils is less than 100 phr.

2. The rubber composition of claim 1 comprising 55 to 70 phr of said first solution polymerized styrene-butadiene rubber and/or 45 to 60 of said second solution polymerized styrene-butadiene rubber.

3. The rubber composition of claim 1 or 2 comprising from 15 to 40 phr of said resin.

4. The rubber composition of at least one of the previous claims, wherein the Tg of said first solution polymerized styrene-butadiene rubber is lower, preferably at least 5ºC lower or in a range of from 5 to 15 ºC lower, than the Tg of said second solution polymerized styrene-butadiene rubber.

5. The rubber composition of at least one of the previous claims, wherein the Tg of said first solution polymerized styrene-butadiene rubber is in a range of from - 85°C to -30°C or in a range of from -40°C to -30°C; and/or wherein the Tg of said second solution polymerized styrene-butadiene rubber is in a range of from -28°C to -5°C or in a range of from -28°C to -20°C.

6. The rubber composition of at least one of the previous claims, wherein the rubber composition further comprises from 5 to 20 phr or from 8 to 12 phr of a polybutadiene.

7. The rubber composition of at least one of the previous claims, wherein the resin is a hydrocarbon type resin or modification thereof, or wherein the resin is a renewable biobased chemistry type resin, modification, or mixture thereof.

8. The rubber composition of at least one of the previous claims, wherein the oil is selected from the group consisting of: aromatic; paraffinic; naphthenic; MES; TDAE; heavy naphthenic; triglyceride vegetable; and combinations thereof.

9. The rubber composition of at least one of the previous claims, wherein the rubber composition is free of a resin having a Tg of more +30°C or is free of a resin having a Tg of more +50°C, as measured in accordance with ASTM D6604.

10. The rubber composition of at least one of the previous claims, wherein the rubber composition is free of a rubber processing oil added during compounding or contains less than 6 phr of a rubber processing oil added during compounding.

11. The rubber composition of at least one of the previous claims, wherein said first s-SBR is extended with less than 37.5 phr oil, preferably less than 30 phr oil; and/or wherein said second s-SBR is extended with less than 37.5 phr oil, preferably less than 30 phr oil.

12. The rubber composition of at least one of the previous claims, wherein the rubber composition further comprises from 60 to 170 phr of silica.

13. The rubber composition of claim 12 wherein the weight ratio of silica to a total of hydrocarbon resins and oils is greater than 2.

14. A tire comprising the rubber composition in accordance with at least one of the previous claims.

15. The tire of claim 14 wherein the tire is a pneumatic tire having a tread comprising said rubber composition.

## Patentansprüche

1. Kautschukzusammensetzung auf der Basis von vulkanisierbarem Kautschuk, die auf Basis von 100 Gewichtsteilen Elastomer (ThK) Folgendes umfasst:
(A) von 40 bis 80 ThK eines ersten Styrol-Butadien-Kautschuks, der in Lösung polymerisiert wurde (s-SBR) ; wobei (i) der erste Styrol-Butadien-Kautschuk, der in Lösung polymerisiert wurde (s-SBR), einen Gehalt an gebundenem Styrol aufweist, der innerhalb eines Bereichs liegt, der 5 bis 50 Gewichtsprozent darstellt, einen Gehalt an Vinyl 1, 2-Gruppen, der in einem Bereich von 10 bis 40 Gew.-%liegt , bezogen auf das Gewicht des Kautschuks, und eine Glasübergangstemperatur, die in einem Bereich von -85 °C bis -20 °C liegt, wie sie gemäß ASTM D7426 gemessen wird; und/oder wobei (ii) der genannte erste Styrol-Butadien-Kautschuk, der in Lösung polymerisiert wurde, mit einer Menge von weniger als 37,5 ThK eines Öls gestreckt ist;
(B) von 30 bis 70 ThK eines zweiten und unterschiedlichen Styrol-Butadien-Kautschuks, der in Lösung polymerisiert wurde (s-SBR); wobei der zweite Styrol-Butadien-Kautschuk, der in Lösung polymerisiert wurde (s-SBR), einen Gehalt an gebundenem Styrol aufweist, der in einem Bereich von 15 bis 45 Gew.-% liegt, einen Gehalt an 1,2-Vinylgruppen, der in einem Bereich von 20 bis 60 Gew.-% liegt, und eine Glasübergangstemperatur, die in einem Bereich von -30 °C bis -5 °C liegt, wie sie gemäß ASTM D7426 gemessen wird; und/oder wobei (ii) der genannte zweite Styrol-Butadien-Kautschuk, der in Lösung polymerisiert wurde, mit einer Menge von weniger als 37,5 ThK eines Öls gestreckt wird;
(C) von 5 bis 80 ThK eines Harzes; wobei das Harz eine Glasübergangstemperatur aufweist, die in dem Bereich von -100 °C bis +30 °C liegt, wie sie gemäß ASTM6604 gemessen wird;
(D) von 0 bis 60 ThK eines Kautschukölextenders ;
wobei eine Gesamtmenge der Harze und Öle weniger als 100 ThK beträgt.

2. Kautschukzusammensetzung nach Anspruch 1, welche 55 bis 70 ThK des ersten Styrol-Butadien-Kautschuks, der in Lösung polymerisiert wurde, und/oder 45 bis 60 ThK des zweiten Styrol-Butadien-Kautschuks, der in Lösung polymerisiert wurde, umfasst.

3. Kautschukzusammensetzung nach Anspruch 1 oder 2, die von 15 bis 40 ThK des oben genannten Harzes umfasst.

4. Kautschukzusammensetzung nach mindestens einem der vorhergehenden Ansprüche, wobei die Glasübergangstemperatur des ersten Styrol-Butadien-Kautschuks, der in Lösung polymerisiert wurde, niedriger, vorzugsweise um mindestens 5 °C oder in dem Bereich von 5 °C bis 15 °C niedriger ist, als die Glasübergangstemperatur des zweiten Styrol-Butadien-Kautschuks, der in Lösung polymerisiert wurde.

5. Kautschukzusammensetzung nach mindestens einem der vorhergehenden Ansprüche, wobei die Glasübergangstemperatur des ersten Styrol-Butadien-Kautschuks, der in Lösung polymerisiert wurde, in einem Bereich von -85°C bis -30°C oder in einem Bereich von -40°C bis -30°C liegt; und/oder wobei die Glasübergangstemperatur des zweiten Styrol-Butadien-Kautschuks, der in Lösung polymerisiert wurde, in einem Bereich von -28°C bis -5°C oder in einem Bereich von -28°C bis -20°C liegt.

6. Kautschukzusammensetzung nach mindestens einem der vorhergehenden Ansprüche, wobei die Kautschukzusammensetzung ferner von 5 bis 20 ThK oder von 8 bis 12 ThK eines Polybutadiens umfasst.

7. Kautschukzusammensetzung nach mindestens einem der vorhergehenden Ansprüche, wobei das Harz ein Harz vom Kohlenwasserstofftyp oder eine Modifikation davon darstellt; oder wobei das Harz ein biobasiertes erneuerbares Harz, eine Modifikation desselben oder ein Gemisch davon darstellt.

8. Kautschukzusammensetzung nach mindestens einem der vorhergehenden Ansprüche, wobei das Öl aus der Gruppe ausgewählt ist, die aus: aromatischen Ölen; paraffinischen Ölen; naphthenischen Ölen; MES-Ölen, TDAE-Ölen; schweren naphthenischen Ölen; pflanzlichen Ölen auf Basis von Triglyceriden sowie Kombinationen davon, besteht.

9. Kautschukzusammensetzung nach mindestens einem der vorhergehenden Ansprüche, wobei die Kautschukzusammensetzung frei von einem Harz ist, das eine Glasübergangstemperatur aufweist, die höher als +30 °C ist, oder frei von einem Harz ist, das eine Glasübergangstemperatur aufweist, die höher als +30 °C ist, wie sie gemäß ASTM D6604 gemessen wird.

10. Kautschukzusammensetzung nach mindestens einem der vorhergehenden Ansprüche, wobei die Kautschukzusammensetzung frei von einem Kautschukölextender ist, der während der Compoundierung zugegeben wird, oder eine Menge von weniger als 6 ThK eines Kautschukölextenders enthält, der während der Compoundierung zugegeben wird.

11. Kautschukzusammensetzung nach zumindest einem der vorhergehenden Ansprüche, wobei der erste s-SBR-Kautschuk mit weniger als 37,5 ThK Öl, vorzugsweise mit 30 ThK Öl gestreckt wird; und/oder wobei der zweite s-SBR-Kautschuk mit weniger als 37,5 ThK Öl, vorzugsweise mit 30 ThK Öl gestreckt wird.

12. Kautschukzusammensetzung nach mindestens einem der vorhergehenden Ansprüche, wobei die Kautschukzusammensetzung ferner eine Menge von 60 bis 170 ThK Silica-haltig umfasst.

13. Kautschukzusammensetzung nach mindestens einem der vorhergehenden Ansprüche, wobei das Gewichtsverhältnis von Silica zu der Gesamtheit der Kohlenwasserstoffharze und Öle größer als 2 ist.

14. Reifen, der die Kautschukzusammensetzung in Übereinstimmung mit mindestens einem der vorhergehenden Ansprüche umfasst.

15. Reifen nach Anspruch 14, wobei der Reifen ein Luftreifen ist, der eine Lauffläche aufweist, welche die Kautschukzusammensetzung umfasst.

## Revendications

1. Composition à base de caoutchouc vulcanisable, qui comprend, lorsqu'on se base sur 100 parties en poids d'élastomère (phr) :
(A) de 40 à 80 phr d'un premier caoutchouc de styrène butadiène qui a été polymérisé en solution (s-SBR) ; dans laquelle (i) ledit premier caoutchouc de styrène butadiène qui a été polymérisé en solution (s-SBR) possède une teneur en styrène lié qui se situe au sein d'une plage qui représente de 5 à 50 pour cent en poids, une teneur en groupe vinyle 1,2 qui se situe au sein d'une plage qui représente de 10 à 40 pour cent en poids lorsqu'on se base sur le poids du caoutchouc, ainsi qu'une température de transition vitreuse qui se situe au sein d'une plage allant de -85 °C à -20 °C, telle qu'on la mesure en conformité avec la norme ASTM D7426 ; et/ou dans laquelle (ii) ledit premier caoutchouc de styrène butadiène qui a été polymérisé en solution est étendu avec une quantité inférieure à 37,5 phr d'une huile ;
(B) de 30 à 70 phr d'un deuxième et différent caoutchouc de styrène butadiène qui a été polymérisé en solution (s-SBR) ; dans laquelle ledit deuxième caoutchouc de styrène butadiène qui a été polymérisé en solution (s-SBR) possède une teneur en styrène lié qui se situe au sein d'une plage qui représente de 15 à 45 pour cent en poids, une teneur en groupe vinyle 1,2 qui se situe au sein d'une plage qui représente de 20 à 60 pour cent en poids, ainsi qu'une température de transition vitreuse qui se situe au sein d'une plage allant de -30 °C à -5 °C, telle qu'on la mesure en conformité avec la norme ASTM D7426 ; et/ou dans laquelle (ii) ledit deuxième caoutchouc de styrène butadiène qui a été polymérisé en solution est étendu avec une quantité inférieure à 37,5 phr d'une huile ;
(C) de 5 à 80 phr d'une résine ; dans laquelle la résine possède une température de transition vitreuse qui se situe au sein d'une plage allant de -100 °C à +30 °C, telle qu'on la mesure en conformité avec la norme ASTM6604 ;
(D) de 0 à 60 phr d'une huile d'extension de caoutchouc ;
dans laquelle une quantité totale des résines et des huiles est inférieure à 100 phr.

2. Composition de caoutchouc selon la revendication 1, qui comprend de 55 à 70 phr dudit premier caoutchouc de styrène butadiène qui a été polymérisé en solution et/ou de 45 à 60 phr dudit deuxième caoutchouc de styrène butadiène qui a été polymérisé en solution.

3. Composition de caoutchouc selon la revendication 1 ou 2, qui comprend de 15 à 40 phr de ladite résine.

4. Composition de caoutchouc selon au moins une des revendications précédentes, dans laquelle la température de transition vitreuse dudit premier caoutchouc de styrène butadiène qui a été polymérisé en solution est inférieure, de préférence inférieure à concurrence d'au moins 5 °C ou dans une plage qui va de 5 °C à 15 °C, à la température de transition vitreuse dudit deuxième caoutchouc de styrène butadiène qui a été polymérisé en solution.

5. Composition de caoutchouc selon au moins une des revendications précédentes, dans laquelle la température de transition vitreuse dudit premier caoutchouc de styrène butadiène qui a été polymérisé en solution se situe dans une plage qui va de -85 °C à -30 °C ou dans une plage qui va de -40 °C à -30 °C ; et/ou dans laquelle la température de transition vitreuse dudit deuxième caoutchouc de styrène butadiène qui a été polymérisé en solution se situe dans une plage qui va de -28 °C à -5 °C ou dans une plage qui va de -28 °C à -20 °C.

6. Composition de caoutchouc selon au moins une des revendications précédentes, dans laquelle la composition de caoutchouc comprend en outre de 5 à 20 phr ou de 8 à 12 phr d'un polybutadiène.

7. Composition de caoutchouc selon au moins une des revendications précédentes, dans laquelle la résine représente une résine de type hydrocarbure ou une modification de cette dernière ; ou dans laquelle la résine représente une résine renouvelable biosourcée, une modification de cette dernière, ou un de leurs mélanges.

8. Composition de caoutchouc selon au moins une des revendications précédentes, dans laquelle l'huile est choisie parmi le groupe qui est constitué par : des huiles aromatiques ; des huiles paraffiniques ; des huiles naphténiques ; des huiles MES, des huiles TDAE ; des huiles naphténiques lourdes ; des huiles végétales à base de triglycérides, ainsi que leurs combinaisons.

9. Composition de caoutchouc selon au moins une des revendications précédentes, dans laquelle la composition de caoutchouc est exempte d'une résine qui possède une température de transition vitreuse qui est supérieure à +30 °C ou est exempte d'une résine qui possède une température de transition vitreuse qui est supérieure à +30 °C, telle qu'on la mesure en conformité avec la norme ASTM D6604.

10. Composition de caoutchouc selon au moins une des revendications précédentes, dans laquelle la composition de caoutchouc est exempte d'une huile d'extension de caoutchouc que l'on ajoute au cours du compoundage ou contient une quantité inférieure à 6 phr d'une huile d'extension de caoutchouc que l'on ajoute au cours du compoundage.

11. Composition de caoutchouc selon au moins une des revendications précédentes, dans laquelle ledit premier caoutchouc s-SBR est étendu avec moins de 37,5 phr d'huile, de préférence avec moins de 30 phr d'huile ; et/ou dans laquelle ledit deuxième caoutchouc s-SBR est étendu avec moins de 37,5 phr d'huile, de préférence avec moins de 30 phr d'huile.

12. Composition de caoutchouc selon au moins une des revendications précédentes, dans laquelle la composition de caoutchouc comprend en outre une quantité de 60 à 170 phr de silice.

13. Composition de caoutchouc selon au moins une des revendications précédentes, dans laquelle le rapport en poids entre la silice et le total des résines d'hydrocarbures et des huiles est supérieur à 2.

14. Bandage qui comprend la composition de caoutchouc en conformité avec au moins une des revendications précédentes.

15. Bandage selon la revendication 14, dans lequel le bandage est un bandage pneumatique qui possède une bande de roulement qui comprend ladite composition de caoutchouc.
